# EUROPEAN PATENT SPECIFICATION

(11) **EP 3 359 935 B1**
(45) Date of publication and mention of the grant of the patent: **11.03.2020**
(21) Application number: 16787356.1
(22) Date of filing: 06.10.2016
(51) Int. Cl.: G01L 1/12, G01L 3/10, G01L 25/00

(54) **HYSTERESIS COMPENSATED FORCE SENSING DEVICE AND METHOD**
HYSTERESIS KOMPENSIERTE KRAFTSENSORVORRICHTUNG UND VERFAHREN
DISPOSITIF ET PROCÉDÉ DE DÉTECTION DE FORCE AVEC COMPENSATION DE L'HYSTERÈSE

(30) Priority: 06.10.2015 EP 15188528
(43) Date of publication of application: 15.08.2018
(73) Proprietor: Torque And More GmbH, 82319 Starnberg (DE)
(72) Inventor: MAY, Lutz, 82319 Starnberg (DE)
(74) Representative: KASTEL Patentanwälte PartG mbB
(86) International application number: PCT/EP2016/073870
(87) International publication number: WO 2017/060346

(56) References cited:
- EP-A1- 2 615 422
- EP-A1- 2 833 109
- WO-A1-2014/090970

## Description

### Field of the Invention

The present invention relates to a device and a method for hysteresis compensated force sensing, and in particular to a device and a method for automatic compensation of a hysteresis related deviation of sensing signals at magnetic field based force sensing.

### Background of the Invention

Hysteresis is a known phenomenon in ferromagnetic materials like iron (Fe), nickel (Ni), cobalt (Co) and their alloys. It is the inability of the material to return back to its original state when an external force or magnetic field previously applied to it is removed. Hysteresis can occur due to the mechanical pressure applied on the material (elastic hysteresis) and also due to the applied magnetic field (magnetic hysteresis).

In any sensor design and development industry, it is critical for the sensing unit to be capable of measuring the best signal without noise or other distortions. Noise can be compensated by the implementation of analogue filters and also by software algorithms. Apart from noise, the other major distortions include temperature, humidity, vibration, as well as hysteresis. Depending on the quality of the test object's alloy, the measured hysteresis may be larger than ±2.5% which may not be acceptable in some applications.

EP 2 615 422 A1 describes a force measurement sensor for measuring an applied force onto an object. The force measurement sensor comprises a first sensing unit which comprises a first flux concentrator having a first facing orientation pointing towards a surface of the object, a first magnetic field generating unit being adapted for generating a magnetic field, a first magnetic field detector unit being adapted for detecting a first magnetic field which field being generated by the first magnetic field generating unit and being influenced by the applied force to be measured.

EP 2 833 109 A1 describes a measurement apparatus for detecting an amount of mechanical stress on a test object, the measurement apparatus being adapted to generate a magnetic field and to receive the magnetic field to detect a change of a magnetic property of the test object due to the mechanical stress exerted on the test object. The measurement apparatus is furthermore adapted to compensate for changes of one or more additional physical properties of the test object and/or adapted to compensate for changes of one or more environmental properties affecting the test object.

WO 2014/090970 A1 describes an active force measuring device for measuring a force impact onto a ferromagnetic object comprising a flux concentrator having first and second ends facing the ferromagnetic object to me measured, a magnetic field generation coil arrangement being wound around the flux concentrator, wherein the magnetic field generating coil arrangement is adapted for generating a magnetic field having a main generating direction between the first end and the second end, and a magnetic field sensing arrangement, wherein the magnetic field sensing arrangement is arranged between the first end and the second end.

### Summary of the Invention

The invention provides a method and device for hysteresis compensation at a magnetic field based force sensing, a corresponding programme element and computer readable medium, according to the subject matter of the independent claims. Further embodiments are incorporated in the dependent claims.

It should be noted that the following described exemplary embodiments of the invention apply also for the method, the device, the programme element and the computer readable medium.

According to the invention, a sensor device for measuring forces applied to an object to be sensed with the sensor device is provided, the sensor device comprising a magnetic field generating element being adapted for generating a magnetic field in order to generate a magnetic flux in an object to be sensed, a first magnetic field sensing element being adapted to sense a magnetic field depending on a variation of the generated magnetic flux in said object to be sensed, a driving unit being adapted to drive the magnetic field generating element with a first driving signal and with a second driving signal, and an evaluating unit being adapted to evaluate a first sensing signal based on the magnetic field sensed by the first magnetic sensing element resulting from driving the magnetic field generating element with the first generating signal, and a second sensing signal based on the magnetic field sensed by the first magnetic sensing element resulting from driving the magnetic field generating element with the second signal, wherein the first driving signal is an alternating current with a first predetermined frequency and the second driving signal is an alternating current with a second predetermined frequency, which is different from the first predetermined frequency. The first signal has a first predetermined amplitude and the second signal has a second predetermined amplitude, wherein the first predetermined frequency is higher than the second predetermined frequency and the first predetermined amplitude is lower than the second predetermined amplitude.

The evaluating unit is adapted to determine the difference between the first sensing signal and the second sensing signal at an applied force, and to determine a correction value for at least one of the first and second sensing signals in order to compensate a hysteresis related deviation between the respective sensing signal sensed when applying said force to an hysteresis biased object to be sensed and a sensing signal sensed when applying a force to an hysteresis unbiased object to be sensed.

Thus, it is possible to eliminate the hysteresis effect from the sensing results. As the mechanical stress of an applied force to an object is higher close to the surface, also the hysteresis will be larger in the outer regions beneath the surface. As different frequencies of externally applied magnetic fields result in a different penetration depth owing to the skin effect, at least two different frequencies provide at least two sensing signals having a different absolute hysteresis effect depending on the penetration depth. This can be used to eliminate deviations from the sensing signals resulting from the hysteresis effect.

According to the invention, the first signal has a first predetermined amplitude and the second signal has a second predetermined amplitude, wherein the first predetermined frequency is higher than the second predetermined frequency and the first predetermined amplitude is lower than the second predetermined amplitude.

Thus, the penetration effect can be supported and further the expected signal strengths can be compensated beforehand. As the higher frequency will represent the areas beneath the surface having a stronger hysteresis effect, the lower amplitude makes a later normalizing easier, or even superfluous.

According to an exemplary embodiment the first generator signal and the second generator signal are applied alternately, so that either the first generator signal or the second generator signal is applied to the magnetic field generating element.

Thus, the signals can be separated with respect to the generating frequency. No disturbances are expected, as the frequencies are clearly separated at the driving unit while generating a magnetic field, as well as the evaluation unit while evaluation the signals. A common clock for synchronized switching can be used by the driving unit and the evaluation unit.

According to an exemplary embodiment the first generator signal and the second generator signal are applied at least temporally overlapping, so that at least temporarily both the first generator signal and the second generator signal is applied to the magnetic field generating element.

Thus, the sensing procedure can be shorter. If a switching can be avoided, also transits can be avoided. The separation of the signals can be realized with e.g. band pass filters. The overlapping frequencies are an alternative to the clearly temporary separated application of different frequencies. It should be noted that also a combination of a frequency separation and a frequency overlapping can be applied, in particular when using more than two different frequencies, e.g. four frequencies. In this case two frequencies can be applied alternately and other two alternately applied frequencies can be applied parallel to the first two frequencies.

According to the invention, the evaluating unit is adapted to determine the difference between the first sensing signal and the second sensing signal at an applied force, and to determine a correction value for at least one of the first and second sensing signals in order to compensate a hysteresis related deviation between the respective sensing signal sensed when applying said force to an hysteresis biased object to be sensed and a sensing signal sensed when applying a force to an hysteresis unbiased object to be sensed.

Thus, the hysteresis effect onto the sensing signals can be eliminated. It should be noted that at hysteresis biased objects a signal of an unbiased object is not available and only a theoretical value. However only this theoretical value represents the true force applied, wherein at a biased object it is to be distinguished between the signal portion resulting from the applied force and the signal portion resulting from the hysteresis. Consequently, if it is possible to determine the amount of contribution of the hysteresis, the signal portion relating to the force can be determined and thus the true force.

According to an exemplary embodiment the correction value is determined based on an algorithm being representative for the object to be sensed.

Thus, a fast elimination of the hysteresis effect onto the sensing signals can be achieved. The algorithm may be provided by a manufacturer of the object or may be determined when installing the sensor by e.g. applying a spectrum of forces before and after a maximum force, i.e. traveling along the entire hysteresis characteristic.

According to an exemplary embodiment the sensor device comprises an initializing unit being adapted to determine the algorithm being representative for the object based on a test cycle including at least two recorded sensing signal sets, each sensing signal set comprising a first sensing signal and a second sensing signal at an applied force.

Thus, the sensor is capable to analyze the respective object to be sensed itself. The sensor detects the characteristic of the object and determines the algorithm which serves as a base for further sensing procedures. This can be supported by a particular test cycle. This algorithm can successively be adapted and improved so that the sensor, in particular the evaluation unit learns the algorithm. This is of relevance as the hysteresis of an object may change depending on the applied maximum force ever, as soon as this maximum force is lower than the force where the hysteresis arrives at its saturation.

According to an exemplary embodiment the sensing signal sets are recorded at at least first and second applied forces, wherein at least one sensing signal set is recorded before applying a force being higher than the first and second applied forces, and wherein at least one sensing signal set is recorded after applying a force being higher than the first and second applied forces.

Thus, sensing values can be provided which include values of both branches of the hysteresis characteristic. This makes the calculation of a correction value and thus the compensation more exact. In this case the first force may be applied before having reached a higher force corresponding to the turning point of the hysteresis characteristic, whereas the second force is applied after having reached said higher force corresponding to the turning point of the hysteresis characteristic. In particular if the first and second force is the same, the compensation may be very exact. In particular if the hysteresis is symmetrical, the true value is the average of the both sets recorded at said force. It should be noted that in this case two sensing values before and after having applied the higher force at a single frequency may be sufficient to determine the median and thus the true value for force determination.

According to an exemplary embodiment the sensor comprises a normalizing unit being adapted to bring the first sensing signal and the second sensing signal of an actually applied force into a relation corresponding to a relation of previously determined first and second sensing signals of a previously applied maximum force.

Thus, the evaluation is facilitated. If a signal of one frequency is multiplied/divided by a factor so that the maximum signal values of both frequencies are the same, a direct comparison of the both signals is possible. The calculation of the compensation is easier when having normalized the sensing values beforehand.

According to an exemplary embodiment the sensor device comprises as the first magnetic field sensing element a first inductance arrangement having a first coil with a corresponding main sensing direction, and as a second magnetic field sensing element a second inductance arrangement having a second coil with a corresponding main sensing direction, wherein first inductance arrangement and the second inductance arrangement are connected, wherein the first coil and the second coil are oriented so as to have the corresponding main magnetizing directions oriented toward an object to be sensed, wherein the first coil and the second coil with respect to the corresponding main sensing directions are connected anti-parallel, in particular such that in a homogenous magnetic field applied to the first coil and the second coil the signal of the first coil and the signal of the second coil results in an at least partially compensation of signals at the first coil and the second coil, leading to a resulting signal over the first inductance arrangement and the second inductance arrangement.

Thus, the signal strength can be improved, so that together with the hysteresis compensation a more exact force sensing can be provided. As the compensated signals of the first and second coil result in zero when having applied no force or a fixed offset force, the sensor electronics may have a higher resolution for sensing the resulting signal of the first and second coil when having applied a force to be detected.

According to an exemplary embodiment the sensor further comprising a flux concentrator with a first leg and a second leg, wherein the first coil is wound around the first leg and the second coil is wound around the second leg.

Thus, the sensing of the magnetic field can be done more effectively to the object to be sensed. Stray effects can be minimized.

According to an exemplary embodiment the flux concentrator comprises a further leg, wherein the magnetic field generating element is a coil wound around the further leg, wherein the further leg is located at a joint of a yoke branch of the first leg and a yoke branch of the second leg.

Thus, the generated magnetic field can be more efficiently applied the object to be sensed.

According to an exemplary embodiment the yoke branch of the first leg and the yoke branch of the second leg form a "V", in particular are orthogonal with respect to each other.

Thus, a clear separation of the different types of applied forces can be achieved. In particular parasitic effects can be eliminated. If for example a sensor with such a flux concentrator is applied to an object to sense torque, an offset bending will be automatically compensated as bending will have the same effect to the first and second magnetic field sensing element so that no bending related signal will result. The torque impact however will result in a anti-parallel effect, so that torque related signals will add but not compensate.

According to an embodiment of the invention the yoke and/or flux concentrator is formed in one piece, in particular made of a sinter material. According to an embodiment the branches of the "V" are orthogonal, i.e. include an angel of substantially 90°. According to an embodiment the legs extend orthogonal from the yoke/branches and receive the sensor coils. According to an embodiment the generator coil is arranged at the leg extending from a junction point of at least two branches of the yoke. According to an embodiment the transit from the yoke branches to the respective legs is rounded, in particular with a radius being larger than the diameter of the legs.

According to an exemplary embodiment the first inductance arrangement further has a third coil with a corresponding main sensing direction, wherein the second inductance arrangement further has a fourth coil with a corresponding main sensing direction, wherein the third coil and the fourth coil are oriented so as to have the respective main magnetizing directions oriented toward an object to be sensed, wherein the first coil and the third coil are connected in series and the second coil and the fourth coil are connected in series; wherein the series connection of the first coil and the third coil with respect to their main sensing directions are connected anti-parallel to the series connection of the second coil and the fourth coil with respect to their main sensing directions, in particular such that in a homogenous magnetic field applied to the first coil, the second coil, the third coil and the fourth coil results in an at least partially compensation of signals at the first coil, the second coil, the third coil and the fourth coil, leading to a resulting signal over the first inductance arrangement and the second inductance arrangement. According to an embodiment the generator coil is arranged at the leg extending from a crossing of a yoke having four sensing coils. According to an embodiment the transit from the yoke branches to the respective legs is rounded, in particular with a radius being larger than the diameter of the legs.

Thus, additional settings can be achieved when dimensioning the coil parameters, in particular the relation of the first and third coil to each other and the relation of the second and fourth coil with respect to each other. A difference in the number of windings may shift the zero point so that directions of the applied torque can be determined.

According to an exemplary embodiment the first leg, the second leg, the third leg and the fourth leg are arranged at corners of a rectangle, in particular a square, with respective end faces of the legs oriented toward the object to be sensed.

Thus, a more or less symmetrical sensor design can be achieved. The sensing failures can be reduced.

According to an exemplary embodiment the further leg is arranged in the centre of the rectangle, in particular the square, with a respective end face of the further leg oriented toward the object to be sensed.

Thus, a better coupling can be achieved, so that the stray losses can be reduced. The magnetic field generator in the centre also avoids un-symmetries and provides an efficient build-up of the sensor unit.

According to an exemplary embodiment the sensor device comprises a flux concentrator, wherein the flux concentrator has wound there around a coil, which coil serves as a magnetic field generator and as magnetic field sensing element at the same time, wherein the sensor signals are gained by either a current detection between the driving unit and the coil, or a voltage drop over the coil. The coil then is driven by the both frequencies.

Thus, only one coil for generating and sensing is required. This design is an alternative to the design with a generator coil and two sensing coils or a generator coil and four sensing coils.

It may be seen as a gist of the present invention to compensate a hysteresis effect of an object to be sensed, so that a gained signal representing the applied torque can be freed of a hysteresis related signal portion to arrive at a "true" applied force related signal.

It should be noted that the above features may also be combined. The combination of the above features may also lead to synergetic effects, even if not explicitly described in detail.

In other words, the approach described herein may be summed up as follows:
The Active Sensing Technology approach described herein enables real-time compensation for unwanted signal hysteresis. This can be done with one of the following three activities:
a) Taking measurements with different IOF (Internal Operating Frequency)
b) Taking measurements when using different (changing) generator magnetic field strength
c) Taking measurements by using a combination of both: different IOF's and different generator magnetic field strength

To compensate for unwanted signal hysteresis, at least two different measurements may be taken and the results of these measurements may be processed further to achieve the desired results: reducing the effects of signal hysteresis.

Example 1: Taking the first torque measurement using the IOF of 2.000 Hz (2 kHz) and storing the measurement result (A), followed by the second torque measurement using a different IOF, like 10.000 Hz (10 kHz) and storing the measurement result as (B). The measurement results A and B have to be normalised first before the difference will be built between them.

The torque measurement taken at the higher IOF (like 10.000 Hz) (B), will show a much larger effect of the signal hysteresis than the measurement taken at a lower IOF (like 2.000 Hz) (A).

Depending on the application specific circumstances the result of the difference (A-Normalised) - (B-Normalised) may have to be multiplied by a final correction factor to meet calibration expectations.

Taking mechanical force measurements (like torque forces) with a higher IOF will result in mechanical stress measurements taken from the surface of the test object. The unwanted effects of the signal hysteresis are strongest at the outer layers (surface) of the test object. Therefore, the torque measurement B will show a much larger signal hysteresis than the torque measurement taken at a much lower IOF. A high IOF (like 10.000 Hz) and above will have a very limited penetration into the surface of the test object. The to be expected measurement depth is in the area of 50 µm to 200 µm.

Taking mechanical force measurements with a low IOF (in the area of 500 Hz for example) will result in mechanical stress measurements taken at the outer and the inner layers of the test object. With a low IOF, the Active Torque Sensor can penetrate deeper and deeper below the surface of the test object. Depending on several physical design factors, the measurement depth into the test object (below the surface of the test object) can be several millimetres (example 1.5 mm to 2.0 mm).

Example 2: Identical to Example 1 with the exception that instead of using different IOFs, the IOF is constant for both measurements to be taken A and B. The difference between the measurement A and B will be that the magnetic flux density (emanated by the sensing module) will change. The magnetic flux density of the generator (LG) can be changed by changing (increasing or decreasing) the electric current (IG) with which the magnetic field generator LG is powered. In this example, the first measurement (A) will be taken while IG is high and the second measurement (B) will be taken while IG is much lower. The rest of the signal processing is then identical to Example 1.

When using a large current (AC or DC) to power the magnetic field generator LG (like 100 mA), mechanical stresses will be measured from the surface of the test object and from layers that are deeper into the test object. When using a small electric current (like 25 mA) then only the outer layers of the test object will be penetrated by the emanating magnetic flux lines.

For example, the device described herein may be used for measuring mechanical forces in drilling pipes that have been tooled from unhardened materials. Mechanical force measurements may be executed directly at pipes. The metal pipes may be ferromagnetic, unhardened, and manufactured from low cost material.

When an external magnetic field is applied to a ferromagnetic material such as iron, the atomic dipoles align themselves with the magnetic field. Even when the field is removed, part of the alignment will be retained: the material has become magnetized. Once magnetized, the magnet will stay magnetized indefinitely. To demagnetize, it requires heat or a magnetic field in the opposite direction. This is the effect that provides the element of memory in a hard disk drive.

The relationship between field strength H and magnetization M is not linear in such materials. If a magnet is demagnetized (H=M=0) and the relationship between H and M is plotted for increasing levels of field strength, M follows the initial magnetization curve. This curve increases rapidly at first and then approaches an asymptote called magnetic saturation. If the magnetic field is now reduced monotonically, M follows a different curve. At zero field strength, the magnetization is offset from the origin by an amount called the remanence. If the H-M relationship is plotted for all strengths of applied magnetic field the result is a hysteresis loop called the main loop. The width of the middle section is twice the coercivity of the material.

A closer look at a magnetization curve generally reveals a series of small, random jumps in magnetization called Barkhausen jumps. This effect is due to crystallographic defects such as dislocations. The larger the mechanical stress measurement range is, the larger the measurement hysteresis will be.

These and other aspects of the present invention will become apparent from and elucidated with reference to the embodiments described hereinafter.

### Brief Description of the Drawings

Exemplary embodiments of the present invention will be described in the following with reference to the following drawings.
Fig. 1 illustrates a schematic build-up of a sensor device according to an exemplary embodiment of the invention.
Fig. 2 illustrates an exemplary frequency pattern of a driving signal a driving unit feeds to a magnetic field generating element.
Fig. 3 illustrates a sensor voltage over applied force characteristic for two different driving current frequencies.
Fig. 4 illustrates normalized sensor voltage over applied force characteristic for two frequencies, where both characteristics are brought into a relation so that they correspond with respect to a particular applied force (Fmax).
Fig. 5 illustrates a schematic build-up of a sensor device according to an exemplary embodiment of the invention with an implemented normalizing and initializing unit.
Fig. 6 illustrates a circuit layout of a sensor device according to an exemplary embodiment of the invention, with two sensing coils with a flux concentrator not illustrated.
Fig. 7 illustrates a flux concentrator for a sensor having a circuit layout as shown in Fig. 6.
Fig. 8 illustrates a flux concentrator as illustrated in Fig. 7, having wound around respective legs a generator coil and sensing coils.
Fig. 9 illustrates a circuit layout of a sensor device according to an exemplary embodiment of the invention, with four sensing coils illustrated without flux concentrator.
Fig. 10 illustrates a flux concentrator for a sensor having a circuit lay out as shown in Fig. 9.
Fig. 11 illustrates a flux concentrator as illustrated in Fig. 10, having wound around respective legs a generator coil and sensing coils.

### Detailed Description of Exemplary Embodiments

This patent application describes a magnetic principle based non-contact mechanical force sensing technology that no longer requires any type of treatment of a ferromagnetic test object 2 from where the measurements have to be taken and is very low complexity in design. The following terminology will be used in this specification: sensor, sensor unit, sensing module, sensor system, and test object.

The sensing module has to be placed nearest to the test object. The test object is the item from where mechanical forces have to be measured. Together, the sensor and the test object will build a sensor system. The test object is a ferromagnetic material like a power transmitting shaft where the mechanical forces have to be measured from. The sensing module is the item that needs to be placed nearest the test object 2 where the mechanical forces have to be measured from. The SCSP electronics is the Signal Conditioning and Signal Processing electronics.

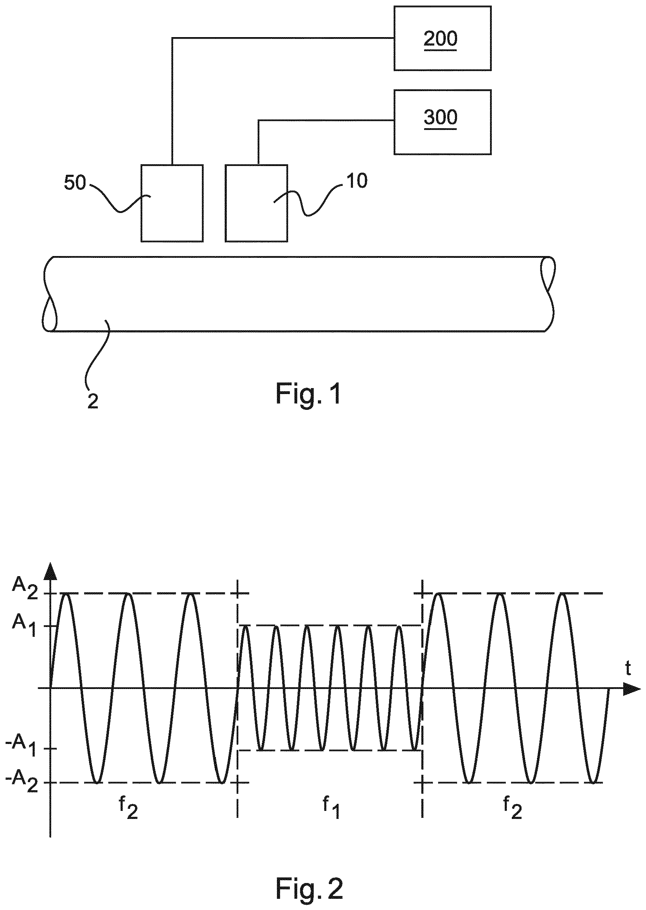

As can be seen in Fig. 1, the sensor unit or sensor 1 comprises a sensing module 10, 50 placed nearest to the test object 2, and the sensor electronics 200, 300. All together, sensor/sensor unit and test object is here called sensor system. The location at the test object where the sensing module is located at is called sensing location. The test object can be of any shape like a symmetrically shaped shaft or beam, flat non-symmetrically shaped beam, tube, etc. and has to be tooled from ferromagnetic material.

Fig. 1 illustrates a schematic build-up of a sensor device according to an exemplary embodiment of the invention. The sensor 1 illustrated in Fig. 1 has a magnetic field generating element 50, which may be a coil. The coil may be wound around a not illustrated flux concentrator. The sensor 1 further has a magnetic field sensing element 10. This magnetic field sensing element may be a sensing coil. This coil may be wound around the same flux concentrator (not shown) as the generator coil. As an alternative the sensing element may be a hall sensor or any other sensing element being capable of sensing a magnetic field. The sensing element may also be implemented in the generator coil. This can be realized by sensing the driving current of the generator coil driving signal, so that only one coil can be used as generating and sensing element. The sensor further comprises a driving unit 200, which is capable of driving the generator element 50 with two different frequencies. The frequencies may also differ in amplitude of the voltage. In this case the current may serve as a sensing signal. The driving signals of different frequencies may also have different, but predetermined current amplitudes. In this case the voltage drop over the coil may serve as sensing signal.

The physical principle behind this invention is to measure the magnetic energy dissipation caused by the applied mechanical stresses/forces at the test object where the measurement will be taken from. A raw signal output of the sensor may have a better quality and a better performance when the test object 2 has been hardened. Better performance means that the measurement signal hysteresis may be larger when using un-hardened test object. It is not necessary that the entire test object has to be hardened. It is sufficient when the hardening process has been applied at least to the sensing location.

The sensing module 10, 50 comprises a magnetic field generating element 50, which can be a inductor (coil), mounted in a holder or a fixture that allows to place this magnetic field generator nearest to the actual sensing location. The inductor (coil) is electrically driven by a signal generator that operates at certain frequencies and is capable to drive the inductor load. The coil may be wound around a flux concentrator. The alternating magnetic field which essentially is a form of energy that travels through the flux concentrator into the surface of the test object 2 and from there again back into the flux concentrator. Depending on the amount and the orientation of the mechanical stress that is applied to the test object 2, the magnetic energy flow will be modulated, meaning that with a high mechanical stress applied a higher amount of energy will be dissipated by the test object 2. In reverse, when the test object is in a relaxed condition, i.e. no mechanical stress applied, the energy dissipation in the test object 2 is at its lowest level assuming that all the other conditions are kept constant or identical.

The sensor electronics has two main functions: generating the signal to drive the magnetic field generator, i.e. inductor or coil to be done by the driver 200, and to recover and process the signal modulation, coming back from the sensing module to be done by an evaluation unit 300, which can be considered as the signal conditioning and signal processing module of the sensor electronics: SCSP module. The electronic signal generator 200 that is driving the magnetic field generator coil 50 is operating with e.g. a constant output voltage. A higher or lower magnetic energy dissipation caused by the mechanical stresses that are applied to the test object results in a modulation of the electric current flow through the magnetic field generating inductor. The SCSP module 300 of the sensor electronics has the task to identify and to measure the amount of the modulation of the supply current that is driving the magnetic field generator coil. After the sensing module has been placed in the correct position and orientation in relation to the "to-be-measured" mechanical forces, a sensor initialization process may be executed by an initializing unit 310. During the initialization process the sensor electronics will identify the optimal signal generator and signal processing settings and will store these settings in an internal non-volatile memory. When using a non-volatile memory for the sensor settings, then the initialization process has to be executed only the very first time when the sensor will be used together with a specific test object 2 and at a specific sensing location.

The orientation with which the magnetic flux lines will travel through the surface of the test object will decide about which mechanical forces will be detected and measured by the sensor. Therefore great care has to be taken when placing the sensing module at the test object. Depending on the angular orientation of the main axis of the flux concentrator, a specific mechanical force will be detected and measured more easily, while the signals from other mechanical forces will be suppressed or cancelled. In an orientation where the magnetically effective axis of the flux concentrator is placed onto the test object 2 with a zero degree angle in relation to the main axis of the test object is most suitable to measure torque forces that will be applied to the test object and will almost completely suppress the effects caused by bending forces. The sensing module orientation where the magnetically effective axis of the flux concentrator is placed onto the test object with a 45 degree angle in relation to the main axis of the test object is most suitable to measure bending forces that will be applied to the test object and will almost completely suppress the effects of applied torque forces. Any angle between these two positions >zero degree to <45 degree will result that the sensor signal output represents a mixture of both torque forces and bending forces

The sensing technology allows the use of a very wide range of ferromagnetic materials for the test object. Basically anything can be used as the test object material as long as "a permanent magnet will be strongly attracted" to the test object. However, when using lower cost alloys, the risk will increase that the measurement output signal of a sensor system will be effected by a noticeable larger measurement or sensing hysteresis. Depending on the quality of the test object alloy, the measurement hysteresis may be larger than +/-2.5% which may not be acceptable in some applications. By sending out e.g. successively one-after-another two different types of electric driver signals that are responsible for generating the magnetic field in the inductor the magnetic field generated by the sensing module will differently penetrate the surface of the test object. The driver signals can vary in frequency and in the signal amplitude, i.e. amount of magnetic energy. Depending on the combination of these two parameters the magnetic flux lines that travel beneath the surface of the test object will travel at different depth. For example, a high generator frequency will cause that the magnetic field will travel nearest the surface of the test object. A larger driver signal amplitude will cause the magnetic flux lines to be pushed deeper beneath the test object surface.

When using alternating two different driver signals like a first signal with a high frequency and a low driver signal amplitude, and a second signal with lower frequency at high driver signal amplitude then the first signal will travel very near the surface of the test object, for example between two pole shoes of a flux concentrator and the second signal will travel deeper beneath the test object surface.

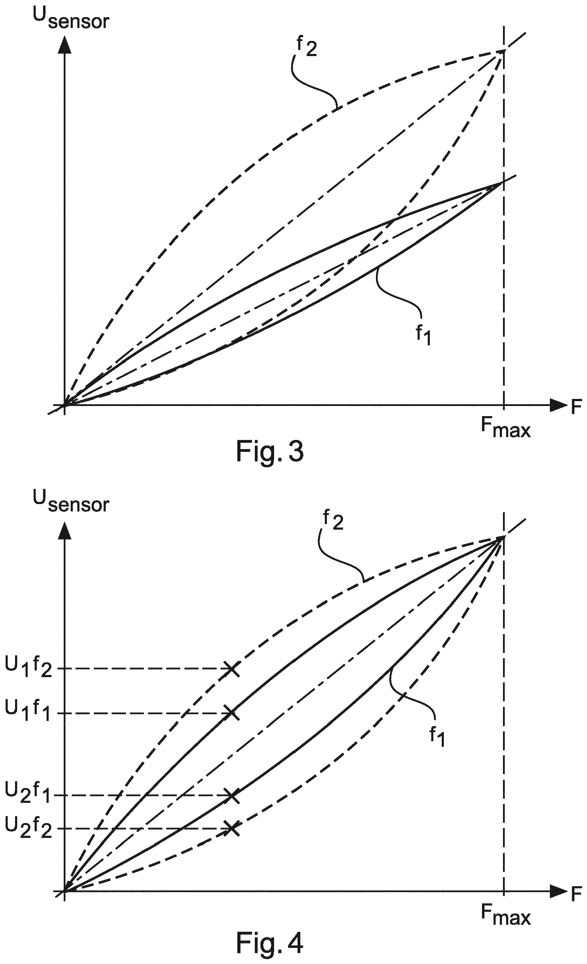

Fig. 2 illustrates an exemplary frequency pattern of a driving signal a driving unit feeds to a magnetic field generating element. To apply this method of sensing or measurement signal hysteresis cancellation or compensation, two different types of generator signals will be sent to the magnetic field generator element 50, a first signal and a second signal. In this example the first signal is of lower amplitude and of higher frequency then the second signal 2, which is of higher amplitude and lower frequency. The sensed signal hysteresis will be largest in relation to the full scale measurement or sensing signal when measuring at the surface of the test object, in the example of Fig. 2 when applying the first signal type. The sensed signal hysteresis will be lower in relation to the full scale measurement signal when measuring deeper inside the test object, in Fig. 2 when applying the second signal type. This can be seen in Fig. 3.

Fig. 3 illustrates a sensor voltage over applied force characteristic for two different driving current frequencies. The two sensing curves will look differently in signal amplitude and in the measured signal hysteresis. It can be expected that the signal curve that is generated by looking deeper beneath the test object surface will have a smaller signal hysteresis (full line). The signal measured from the surface of the test object will have the largest to-be-sensed signal hysteresis (dashed line). The different maximum signal values at a predetermined applied force, e.g. Fmax make it difficult to evaluate the signals. Therefore a normalizing is reasonable, as will be illustrated in Fig. 4.

Fig. 4 illustrates a normalized sensor voltage over applied force characteristic, where both characteristics are brought into a relation so that they correspond with respect to a particular applied force (Fmax). After having normalized the two signal curves, i.e. the signal gain will be matching it becomes obvious that the signal hysteresis between the two different measurements are different in comparison to each other. It should be noted that each signal, i.e. the signal characteristic for the first frequency and the signal characteristic for the second frequency may have its own gain correction factor.

When a specific value of mechanical stress is applied to the test object like a specific bending force or a specific torque, then there will be a difference between these two measurements, here called dU, with dU=U1f1-U1f2 or dU=U2f1-U2f2. Depending on what the mechanical stress history was before this specific sensing has been taken, the hysteresis differential signal is either positive or negative. In other words, when applying a particular force, the signal for the first and second frequency driving signal depends on the "history" of the applied force. When starting from a low force and increasing the force, to the sensing force, the signal will be U2f1 und U2f2, whereas when lowering the force from Fmax back to the same sensing force, the signal will be U1f1 and U1f2. The hysteresis differential signal will have a negative sign when the current mechanical stress sensing is executed after a much higher mechanical forces have been applied to the test object. The actual amount of dU and its polarity will indicate correctly by how much the sensor output signal has to be corrected to substantially reduce or even to eliminate the effect of the signal hysteresis. Based on the dU gained from the signals U1f1, U1f2 or U2f1, U2f2, the "real" signal value can be determined, which is on the center line of the hysteresis. It should be noted that this "real" signal value which is the force related portion of the signal cannot be sensed at hysteresis biased materials of test objects, as the hysteresis masks this signal value. The "real" signal value is a much more exact measure for the actually applied force. In other words, the described hysteresis correction allows a more exact determination of the applied force. The described method does not render necessary to have applied the Fmax, as only one set of sensing values is sufficient to compensate the hysteresis, in particular that set gained when increasing the force starting from zero, without having reached Fmax.

This principle explains hysteresis compensation by the use of two alternating different driver signals such that, a first signal has high frequency and low signal amplitude whereas the second signal will have lower frequency and high signal amplitude.

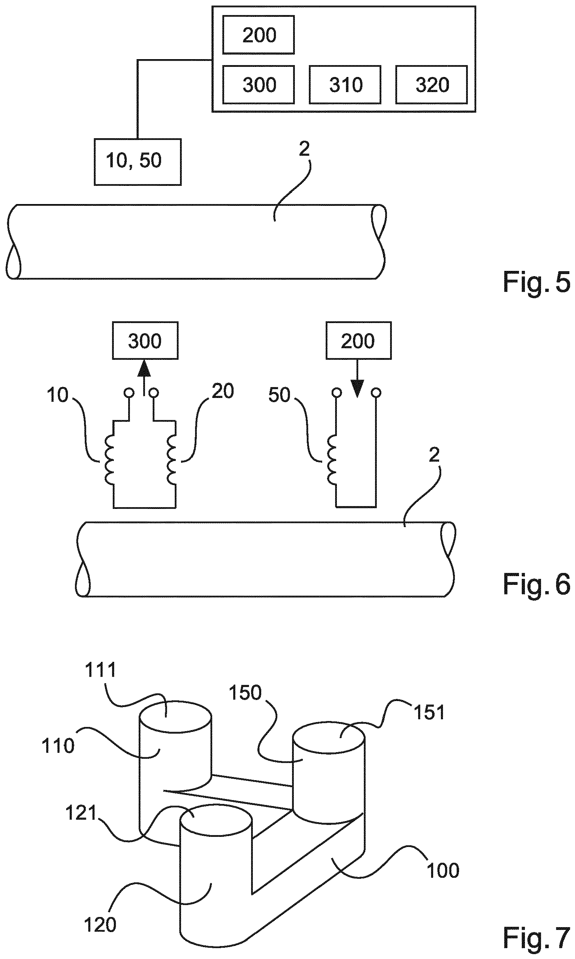

Fig. 5 illustrates a schematic build-up of a sensor device according to an exemplary embodiment of the invention with an implemented normalizing and initializing unit. In addition to Fig. 1 Fig. 5 further illustrates a normalizing unit 310 to normalize both signals from both frequencies, as illustrated in Fig. 4, where the signals are normalized over the signals illustrated in Fig. 3. The sensor of Fig. 5 further comprises an initializing unit 320. This initializing unit may detect sensing signal sets of both frequency signals at particular applied forces and may calculate a correction value, e.g. a correction factor or a correction algorithm, in particular if the hysteresis is not uniform.

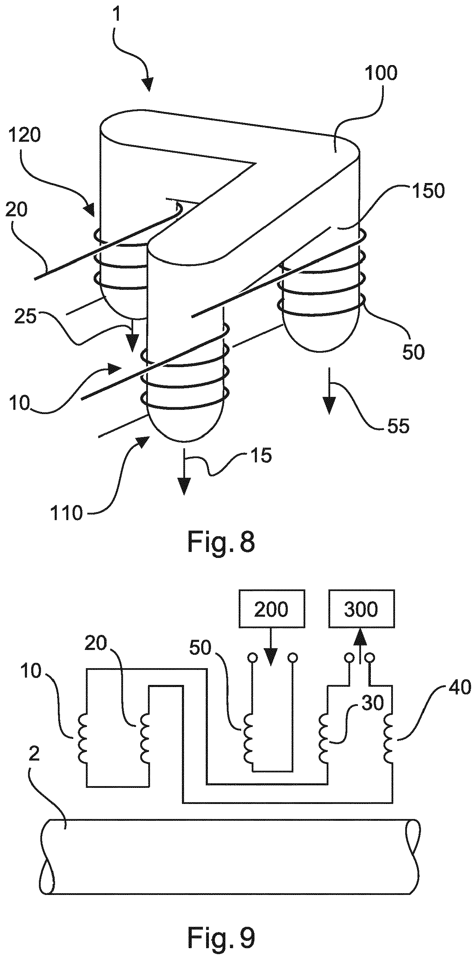

Fig. 6 illustrates a circuit layout of a sensor device according to an exemplary embodiment of the invention, with two sensing coils. A flux concentrator may be provided, but is not illustrated. The generator coil 50 serves for generating a magnetic field, which generates a magnetic flux in the object 2 to be sensed. It should be noted that Fig. 6 is only a schematic illustration. The generating coil 50 may be wound around a not illustrated flux concentrator so that a magnetic field may be generated between legs of the flux concentrator. The sensor further comprises a first sensing coil 10 and a second sensing coil 20. The first and second sensing coils in this embodiment are connected anti-parallel, i.e. in compensating directions. For sensing a torque at the object, the coils 10 and 20 are arranged so that at zero torque the sensing signal of the first coil 10 compensates the sensing signal of the second coil 20. In case torque is applied the resulting signal is no longer zero, but representative for the torque applied. It should be noted that the sensor module may also be dimensioned to have the zero value at an offset force, if e.g. the task is to sense a deviation from the offset force. The arrangement of the sensing coils 10 and 20 and the generating coil 50 with respect to each other on a flux concentrator is described with respect to Fig. 8.

Fig. 7 illustrates a flux concentrator for a sensor having a circuit lay out as shown in Fig. 6. The flux concentrator 100 according to this embodiment has three legs 110, 120, 150. The legs are connected by a yoke having two branches. The two branches from a "V". The angle between the both branches in this embodiment is 90 degrees. The angle may also vary. Legs 110 and 120 are arranged at the respective end of the branches, wherein leg 150 is arranged at the junction point of the branches. The legs 110, 120, 150 are parallel, which however is not mandatory. Each of the legs has an end face 111, 121, 151. The end faces face the object to be sensed. It should be noted that although not illustrated the end faces may be shaped in correspondence with the object to be sensed. If for example the object to be sensed is a rotating shaft with a circular cross section, the end faces of the legs may be shaped so as to match a cylindrical envelope of a slightly larger diameter than the diameter of the object, so that the distance between the end faces and the surface of the object is constant. The length of the legs may be adapted accordingly. With this respect, it should be noted that the flux concentrator with respect to the shape of the end faces and the length of the legs differs for different applications and depends on the orientation the flux concentrator is arranged with respect to the object. It should be noted that although not illustrated the transit between the branches and the legs may be rounded.

Fig. 8 illustrates a flux concentrator as illustrated in Fig. 7, having wound around respective legs a generator coil and sensing coils. The generator coil 50 is wound around leg 150, which leg 150 is arranged at the junction point of the both branches. The sensing coil 10 is wound around leg 110 at the end of the first branch and sensing coil 20 is wound around leg 120 at the end of the second branch. The generator coil 50 generates a first magnetic field between the end face 151 and the end face 111, and a second magnetic field between the end face 151 and the end face 121. When arranging the flux concentrator close to the object with the faces 111, 121, 151 facing the object, the magnetic field lines travel in direction of 15, 25 and 55, so that a magnetic flux is generated in the object. With orthogonal branches, the main directions of both magnetic fluxes in the object are also orthogonal. The sensing coils sense a modification of the magnetic flux resulting from a force impact onto the object. The modified flux in the object leads to a modified flux in the respective branches of the flux concentrators, which can be detected by the sensing coils 10 and 20 as being representative for the applied force. Depending on the force to be sensed, torque or bending, the flux concentrator is oriented with respect to the object. When applying a generator signal with two different frequencies, each of the sensing coils 10 and 20 will provide a signal for both frequencies. The above described hysteresis compensation can be conducted for both sensing coils 10, 20 separately.

When applying a generator signal in an interleaving manner, alternating the first frequency is applied for a particular time and then the second frequency is applied for a particular time to the generator coil 50. The evaluation unit 300 may apply the same interleaving rhythm when evaluation the sensing signals. In case the driving unit 200 and the evaluation unit 300 are implemented as a single electronic entity, the driving unit 200 and the evaluation unit may use the same clock so as to separate the signals for the respective frequency. As an alternative the generator frequencies may be applied at the same time so as to have a generator signal with two or even more frequency components. In this case the evaluation unit may separate the sensing signals by applying e.g. a band pass filters. This may render a clock obsolete. It should be noted that also more than two frequencies may be applied, wherein some of them may be applied in an interleaving mode and some overlapping. In this case both a clock and respective filters are required.

Fig. 9 illustrates a circuit layout of a sensor device according to an exemplary embodiment of the invention with four sensing coils. An optional flux concentrator is not illustrated in Fig. 9. In correspondence to Fig. 6 in this embodiment four sensing coils 10, 20, 30, 40 are arranged with respect to the object. Sensing coils 10 and 30 are connected in series and form sensing arrangement 1030. Sensing coils 20 and 40 are connected in series and form sensing arrangement 2040. The sensing arrangement 1030 is connected anti-parallel to sensing arrangement 2040. Fig. 9 is a schematic illustration of the sensing coils and the generator coil of the sensor. The coils may be wound around a not illustrated flux concentrator, which will be described in the following.

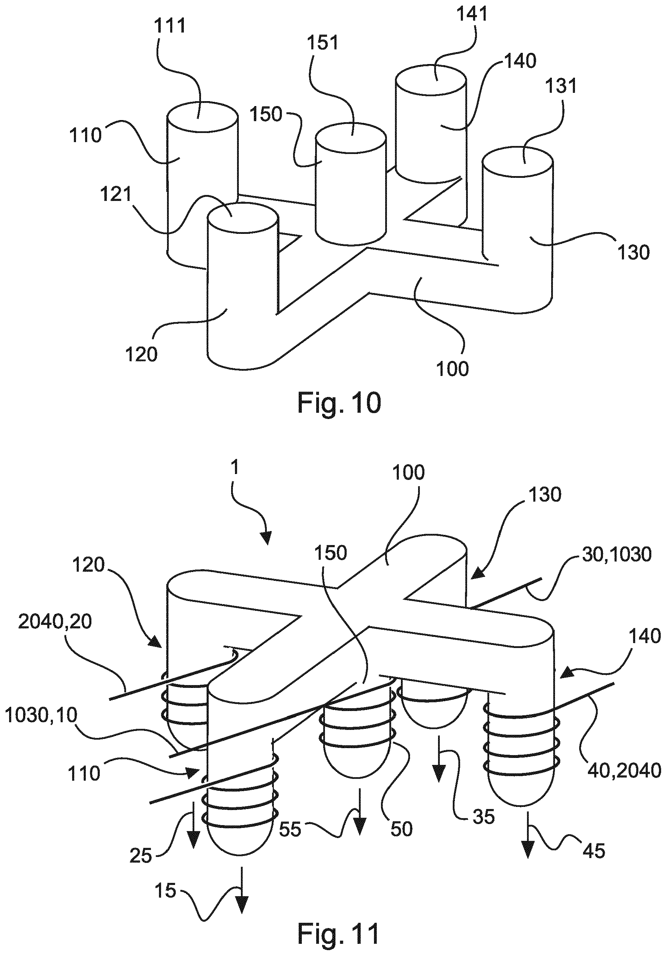

Fig. 10 illustrates a flux concentrator for a sensor having a circuit layout as shown in Fig. 9. The flux concentrator 100 differs from the flux concentrator of Fig. 7 in that it comprises four branches instead of two branches. At the junction point of the four branches the leg 150 extends from the plane of the branches. Respective legs 110, 120, 130, 140 are arranges at the end of the branches. The branches in this embodiment are orthogonal with respect to each other. It should be noted that the end faces 111, 121, 131, 141, 151 may have a shape and an envelope as described with respect to Fig. 7, although not illustrated in Fig. 10. With respect to the features not related to the number of branches and legs, the same details apply as outlined with respect to Fig. 7.

Fig. 11 illustrates a flux concentrator as illustrated in Fig. 10, having wound around respective legs a generator coil and sensing coils. The sensing coils 10, 20, 30, 40 are wound around respective legs 110, 120, 130, 140 of the flux concentrator 100. The general principle is similar to that described in Fig. 8.

It should be noted that the invention may be applied to other sensor geometries, as far as the sensor principle is based on a magnetic sensing principle.

### References:

- 1: sensor device
- 2: object to be sensed
- 10: first coil
- 15: main sensing direction of first coil
- 20: second coil
- 25: main sensing direction of second coil
- 30: third coil
- 35: main sensing direction of third coil
- 40: fourth coil
- 45: main sensing direction of fourth coil
- 50: magnetic field generating element
- 53: coil of magnetic field generator
- 55: main generator magnetic field direction of generator coil
- 100: flux concentrator
- 110: first leg of flux concentrator
- 111: end face of first leg
- 120: second leg of flux concentrator
- 121: end face of second leg
- 130: third leg of flux concentrator
- 131: end face of third leg
- 140: fourth leg of flux concentrator
- 141: end face of fourth leg
- 150: fifth/further leg of flux concentrator
- 151: end face of fifth/further leg
- 200: driving unit
- 300: evaluating unit
- 310: initializing unit
- 320: normalizing unit
- 1030: first inductance arrangement
- 2040: second inductance arrangement

## Claims

1. Sensor device for measuring forces applied to an object to be sensed with the sensor device (1), the sensor device comprising:
a magnetic field generating element (50) being adapted to generate a magnetic field in order to generate a magnetic flux in an object (2) to be sensed,
a first magnetic field sensing element (10) being adapted to sense a magnetic field depending on a variation of the generated magnetic flux in an object to be sensed,
a driving unit (200) being adapted to drive the magnetic field generating element (50) with a first driving signal and with a second driving signal, and
an evaluating unit (300) being adapted to evaluate a first sensing signal based on the magnetic field sensed by the first magnetic sensing element (10) resulting from driving the magnetic field generating element (50) with the first generating signal, and a second sensing signal based on the magnetic field sensed by the first magnetic sensing element (10) resulting from driving the magnetic field generating element (50) with the second signal,
wherein the first driving signal is an alternating current with a first predetermined frequency and the second driving signal is an alternating current with a second predetermined frequency,
wherein the first signal has a first predetermined amplitude and the second signal has a second predetermined amplitude, wherein the first predetermined frequency is higher than the second predetermined frequency,
**characterized in that**
the first predetermined amplitude is lower than the second predetermined amplitude,
the evaluating unit (300) is adapted to determine the difference of the first sensing signal and the second sensing signal at an applied force, and to determine a correction value for at least one of the first and second sensing signals in order to compensate a hysteresis related deviation between a sensing signal sensed when applying a force to a hysteresis biased object (2) to be sensed and a sensing signal sensed when applying a force to a corresponding hysteresis unbiased object (2).

2. Sensor device according to claim 1, wherein the first generator signal and the second generator signal are applied alternately, so that either the first generator signal or the second generator signal is applied to the magnetic field generating element (50).

3. Sensor device according to any one of claims 1 to 2, wherein the first generator signal and the second generator signal are applied at least temporally overlapping, so that at least temporarily both the first generator signal and the second generator signal is applied to the magnetic field generating element (50).

4. Sensor device according to any one of claims 1 to 3, wherein the correction value is determined based on an algorithm being representative for the object to be sensed.

5. Sensor device according to any one of claims 1 to 4, wherein the sensor device (1) comprises an initializing unit (310) being adapted to determine the algorithm being representative for the object based on a test cycle including at least two recorded sensing signal sets, each sensing signal set comprising a first sensing signal and a second sensing signal at an applied force.

6. Sensor device according to claim 5, wherein the sensing signal sets are recorded at at least first and second applied forces, wherein at least one sensing signal set is recorded before applying a force being higher than the first and second applied forces, and wherein at least one sensing signal set is recorded after applying a force being higher than the first and second applied forces.

7. Sensor device according to any one of claims 1 to 6, wherein the sensor (1) comprises a normalizing unit (320) being adapted to bring the first sensing signal and the second sensing signal of an actually applied force into a relation corresponding to a relation of previously determined first and second sensing signals of a previously applied maximum force.

8. Sensor device according to any one of claims 1 to 7, wherein the sensor device comprises:
as the first magnetic field sensing element a first inductance arrangement (1030) having a first coil (10) with a corresponding main sensing direction (15);
as a a second magnetic field sensing element a second inductance arrangement (2040) having a second coil (20) with a corresponding main sensing direction (25);
wherein first inductance arrangement (1030) and the second inductance arrangement (2040) are connected;
wherein the first coil (10) and the second coil (20) are oriented so as to have the corresponding main magnetizing directions (15, 25) oriented toward an object to be sensed;
wherein the first coil (10) and the second coil (20) with respect to the corresponding main sensing directions (15, 25) are connected anti-parallel, in particular such that in a homogenous magnetic field applied to the first coil (10) and the second coil (20) the signals thereof result in an at least partially compensation of signals at the first coil and the second coil, leading to a resulting signal over the first inductance arrangement and the second inductance arrangement.

9. Sensor device according to claim 8, further comprising a flux concentrator (100) with first leg (110) and a second leg (120), wherein the first coil (10) is wound around the first leg and the second coil (20) is wound around the second leg.

10. Sensor device according to any one of claims 8 and 9, wherein the flux concentrator comprises a further leg (150), wherein the magnetic field generating element is a coil (50) wound around the further leg (150), wherein the further leg is located at a joint of a yoke branch of the first leg (110) and a yoke branch of the second leg (120).

11. Sensor device according to any one of claims 8 to 10, wherein the yoke branch of the first leg (110) and the yoke branch of the second leg (120) form a "V", in particular are orthogonal with respect to each other.

12. Sensor device according to any one of claims 8 to 11, wherein the first inductance arrangement (1030) further has a third coil (30) with a corresponding main sensing direction (35); wherein the second inductance arrangement (2040) further has a fourth coil (40) with a corresponding main sensing direction (45); wherein the third coil (30) and the fourth coil (40) are oriented so as to have the respective main magnetizing directions (35, 45) oriented toward an object to be sensed; wherein the first coil (10) and the third coil (30) are connected in series and the second coil (20) and the fourth coil (40) are connected in series; wherein the series connection of the first coil (10) and the third coil (30) with respect to their main sensing directions (15, 35) are connected anti-parallel to the series connection of the second coil (20) and the fourth coil (40) with respect to their main sensing directions (25, 45), in particular such that in a homogenous magnetic field applied to the first coil (10), the second coil (20), the third coil (30) and the fourth coil (40) results in an at least partially compensation of signals at the first coil, the second coil, the third coil and the fourth coil, leading to a resulting signal over the first inductance arrangement and the second inductance arrangement.

13. Sensor device according to any one of claims 1 to 7, wherein the sensor device comprises a flux concentrator, wherein the flux concentrator has wound there around a coil, which coil serves as a magnetic field generator and as magnetic field sensing element at the same time, wherein the sensor signals are gained by either a current detection between the driving unit and the coil, or a voltage drop over the coil.

## Patentansprüche

1. Sensorvorrichtung zum Messen von Kräften, die auf ein mittels der Sensorvorrichtung (1) zu erfassendes Objekt ausgeübt werden, wobei die Sensorvorrichtung umfasst:
ein Magnetfelderzeugungselement (50), das ausgebildet ist zum Erzeugen eines Magnetfelds, um in einem zu erfassenden Objekt (2) einen Magnetfluss zu erzeugen,
ein erstes Magnetfelderfassungselement (10), das ausgebildet ist zum Erfassen eines Magnetfelds in Abhängigkeit von einer Variation des erzeugten Magnetflusses in einem zu erfassenden Objekt,
eine Ansteuereinheit (200), die ausgebildet ist zum Ansteuern des Magnetfelderzeugungselements (50) mit einem ersten Steuersignal und mit einem zweiten Steuersignal, und
eine Auswerteeinheit (300), die ausgebildet ist zum Auswerten eines ersten Erfassungssignals basierend auf dem von dem ersten Magnetfelderfassungselement (10) erfassten Magnetfeld, das aus der Ansteuerung des Magnetfelderzeugungselements (50) mit dem ersten Erzeugungssignal resultiert, und ein zweites Erfassungssignal basierend auf dem von dem ersten Magneterfeldfassungselement (10) erfassten Magnetfeld, das aus der Ansteuerung des Magnetfelderzeugungselements (50) mit dem zweiten Signal resultiert,
wobei das erste Ansteuersignal ein Wechselstrom mit einer ersten vorgegebenen Frequenz ist und das zweite Ansteuersignal ein Wechselstrom mit einer zweiten vorgegebenen Frequenz ist,
wobei das erste Signal eine erste vorgegebene Amplitude aufweist und das zweite Signal eine zweite vorgegebene Amplitude aufweist, wobei die erste vorgegebene Frequenz höher ist als die zweite vorgegebene Frequenz,
**dadurch gekennzeichnet, dass**
die erste vorgegebene Amplitude kleiner ist als die zweite vorgegebene Amplitude,
die Auswerteeinheit (300) ausgebildet ist zum Bestimmen der Differenz des ersten Erfassungssignals und des zweiten Erfassungssignals bei einer angewendeten Kraft und zum Bestimmen eines Korrekturwerts für mindestens eines des ersten und des zweiten Erfassungssignals, um eine hysteresebedingte Abweichung zwischen einem Erfassungssignal, das beim Anwenden einer Kraft auf ein zu erfassendes hysteresevorbelastetes Objekt (2) erfasst wird, und einem Erfassungssignal, das beim Anwenden einer Kraft auf ein entsprechendes nicht hysteresevorbelastetes Objekt (2) erfasst wird, zu kompensieren.

2. Sensorvorrichtung nach Anspruch 1, wobei das erste Generatorsignal und das zweite Generatorsignal abwechselnd angelegt werden, so dass entweder das erste Generatorsignal oder das zweite Generatorsignal an das Magnetfelderzeugungselement (50) angelegt wird.

3. Sensorvorrichtung nach einem der Ansprüche 1 bis 2, wobei das erste Generatorsignal und das zweite Generatorsignal zumindest zeitlich überlappend angelegt werden, so dass zumindest vorübergehend sowohl das erste Generatorsignal als auch das zweite Generatorsignal an das Magnetfelderzeugungselement (50) angelegt wird.

4. Sensorvorrichtung nach einem der Ansprüche 1 bis 3, wobei der Korrekturwert basierend auf einem Algorithmus bestimmt wird, der für das zu erfassende Objekt repräsentativ ist.

5. Sensorvorrichtung nach einem der Ansprüche 1 bis 4, wobei die Sensorvorrichtung (1) eine Initialisierungseinheit (310) umfasst, die ausgebildet ist zum Bestimmen des Algorithmus, der für das Objekt repräsentativ ist, basierend auf einem Testzyklus, der mindestens zwei aufgezeichnete Erfassungssignalsätze beinhaltet, wobei jeder Erfassungssignalsatz ein erstes Erfassungssignal und ein zweites Erfassungssignal bei einer angewendeten Kraft umfasst.

6. Sensorvorrichtung nach Anspruch 5, wobei die Erfassungssignalsätze bei mindestens einer ersten und einer zweiten angewendeten Kraft aufgezeichnet werden, wobei mindestens ein Erfassungssignalsatz aufgezeichnet wird, bevor eine Kraft angewendet wird, die größer ist als die erste und die zweite angewendete Kraft, und wobei der mindestens eine Erfassungssignalsatz aufgezeichnet wird, nachdem eine Kraft angewendet wurde, die größer ist als die erste und die zweite angewendete Kraft.

7. Sensorvorrichtung nach einem der Ansprüche 1 bis 6, wobei der Sensor (1) eine Normierungseinheit (320) umfasst, die derart ausgebildet ist, dass diese das erste Erfassungssignal und das zweite Erfassungssignal einer tatsächlich angewendeten Kraft in eine Relation setzt, die einer Relation von zuvor bestimmten ersten und zweiten Erfassungssignalen einer zuvor angewendeten maximalen Kraft entspricht.

8. Sensorvorrichtung nach einem der Ansprüche 1 bis 7, wobei die Sensorvorrichtung umfasst:
als erstes Magnetfelderfassungselement ein erste Induktivitätsanordnung (1030) mit einer ersten Spule (10) mit einer entsprechenden Haupterfassungsrichtung (15);
als zweites Magnetfelderfassungselement eine zweite Induktivitätsanordnung (2040) mit einer zweiten Spule (20) mit einer entsprechenden Haupterfassungsrichtung (25);
wobei die erste Induktivitätsanordnung (1030) und die zweite Induktivitätsanordnung (2040) verbunden sind;
wobei die erste Spule (10) und die zweite Spule (20) derart orientiert sind, dass deren entsprechende Hauptmagnetisierungsrichtungen (15, 25) auf ein zu erfassendes Objekt ausgerichtet sind;
wobei die erste Spule (10) und die zweite Spule (20) in Bezug auf die entsprechenden Haupterfassungsrichtungen (15, 25) antiparallel geschaltet sind, insbesondere derart, dass in einem homogenen Magnetfeld, das an die erste Spule (10) und die zweite Spule (20) angelegt wird, die Signale derselben in einer zumindest teilweisen Kompensation von Signalen an der ersten Spule und der zweiten Spule resultieren, was zu einem resultierenden Signal über der ersten Induktivitätsanordnung und der zweiten Induktivitätsanordnung führt.

9. Sensorvorrichtung nach Anspruch 8, ferner umfassend einen Flusskonzentrator (100) mit einem ersten Schenkel (110) und einem zweiten Schenkel (120), wobei die erste Spule (10) um den ersten Schenkel und die zweite Spule (20) um den zweiten Schenkel gewickelt ist.

10. Sensorvorrichtung nach einem der Ansprüche 8 und 9, wobei der Flusskonzentrator einen weiteren Schenkel (150) aufweist, wobei das Magnetfelderzeugungselement eine Spule (50) ist, die um den weiteren Schenkel (150) gewickelt ist, wobei der weitere Schenkel an einer Verbindung eines Jochzweigs des ersten Schenkels (110) und eines Jochzweigs des zweiten Schenkels (120) angeordnet ist.

11. Sensor nach einem der Ansprüche 1 bis 10, wobei der Jochzweig des ersten Schenkels (110) und der Jochzweig des zweiten Schenkels (120) ein "V" bilden, insbesondere orthogonal zueinander sind.

12. Sensorvorrichtung nach einem der Ansprüche 8 bis 11, wobei die erste Induktivitätsanordnung (1030) ferner eine dritte Spule (30) mit einer entsprechenden Haupterfassungsrichtung (35) aufweist; wobei die zweite Induktivitätsanordnung (2040) ferner eine vierte Spule (40) mit einer entsprechenden Haupterfassungsrichtung (45) aufweist; wobei die dritte Spule (30) und die vierte Spule (40) derart orientiert sind, dass deren jeweilige Hauptmagnetisierungsrichtung (35, 45) in Richtung auf ein zu erfassendes Objekt orientiert ist; wobei die erste Spule (10) und die dritte Spule (30) in Reihe geschaltet sind und die zweite Spule (20) und die vierte Spule (40) in Reihe geschaltet sind; wobei die Reihenschaltung der ersten Spule (10) und der dritten Spule (30) in Bezug auf deren Haupterfassungsrichtung (15, 35) mit der Reihenschaltung der zweiten Spule (20) und der vierten Spule (40) in Bezug auf deren Haupterfassungsrichtung (25, 45) antiparallel geschaltet ist, insbesondere derart, dass in einem homogenen Magnetfeld, das an die erste Spule (10), die zweite Spule (20), die dritte Spule (30) und die vierte Spule (40) angelegt wird, in einer zumindest teilweisen Kompensation von Signalen an der ersten Spule, der zweiten Spule, der dritten Spule und der vierten Spule resultiert, was zu einem resultierenden Signal über der ersten Induktivitätsanordnung und der zweiten Induktivitätsanordnung führt.

13. Sensorvorrichtung nach einem der Ansprüche 1 bis 7, wobei die Sensorvorrichtung einen Flusskonzentrator umfasst, um den Flusskonzentrator eine Spule gewickelt ist, welche gleichzeitig als Magnetfeldgenerator und als Magnetfelderfassungselement dient, wobei die Erfassungssignale entweder durch eine Stromerfassung zwischen der Ansteuereinheit und der Spule oder durch einen Spannungsabfall über der Spule gewonnen werden.

## Revendications

1. Dispositif de détection pour mesurer des forces appliquées à un objet à détecter avec le dispositif de détection (1), le dispositif de détection comprenant :
un élément générateur de champ magnétique (50) étant adapté pour générer un champ magnétique afin de générer un flux magnétique dans un objet (2) à détecter,
un premier élément de détection de champ magnétique (10) étant adapté pour détecter un champ magnétique en fonction d'une variation du flux magnétique généré dans un objet à détecter,
une unité de commande (200) adaptée pour commander l'élément générateur de champ magnétique (50) avec un premier signal de commande et avec un second signal de commande, et
une unité d'évaluation (300) étant adaptée pour évaluer un premier signal de détection basé sur le champ magnétique détecté par le premier élément de détection de champ magnétique (10) résultant de la commande de l'élément générateur de champ magnétique (50) avec le premier signal de génération, et un second signal de détection basé sur le champ magnétique détecté par le premier élément de détection de champ magnétique (10) résultant de la commande de l'élément générateur de champ magnétique (50) avec le second signal,
dans lequel le premier signal de commande est un courant alternatif avec une première fréquence prédéterminée et le second signal de commande est un courant alternatif avec une seconde fréquence prédéterminée,
dans lequel le premier signal a une première amplitude prédéterminée et le second signal a une seconde amplitude prédéterminée, la première fréquence prédéterminée étant supérieure à la seconde fréquence prédéterminée,
**caractérisé en ce que**
la première amplitude prédéterminée est inférieure à la seconde amplitude prédéterminée,
l'unité d'évaluation (300) est adaptée pour déterminer la différence entre le premier signal de détection et le second signal de détection à une force appliquée, et pour déterminer une valeur de correction pour au moins l'un des premier et second signaux de détection pour compenser un écart lié à une hystérésis entre un signal de détection détecté lorsqu'une force est appliquée à un objet (2) à détecter polarisé par une hystérésis et un signal de détection détecté lorsque une force est appliquée sur un objet (2) correspondant non polarisé par hystérésis.

2. Dispositif de détection selon la revendication 1, dans lequel le premier signal de générateur et le second signal de générateur sont appliqués alternativement, de sorte que soit le premier signal de générateur, soit le second signal de générateur est appliqué sur l'élément générateur de champ magnétique (50).

3. Dispositif de détection selon l'une quelconque des revendications 1 à 2, dans lequel le premier signal de générateur et le second signal de générateur sont appliqués au moins en chevauchement temporel, de sorte qu'au moins temporairement le premier signal de générateur et le second signal de générateur sont appliqués sur l'élément générateur de champ magnétique (50).

4. Dispositif de détection selon l'une quelconque des revendications 1 à 3, dans lequel la valeur de correction est déterminée sur la base d'un algorithme représentatif de l'objet à détecter.

5. Dispositif de détection selon l'une quelconque des revendications 1 à 4, dans lequel le dispositif de détection (1) comprend une unité d'initialisation (310) adaptée pour déterminer que l'algorithme est représentatif de l'objet sur la base d'un cycle de test comprenant au moins deux ensembles de signaux de détection enregistrés, chaque ensemble de signaux de détection comprenant un premier signal de détection et un second signal de détection à une force appliquée.

6. Dispositif de détection selon la revendication 5, dans lequel les ensembles de signaux de détection sont enregistrés à au moins une première et une seconde forces appliquées, dans lequel au moins un ensemble de signaux de détection est enregistré avant d'appliquer une force supérieure aux première et seconde forces appliquées, et dans lequel l'au moins un ensemble de signaux de détection est enregistré après avoir appliqué une force étant supérieure aux première et seconde forces appliquées.

7. Dispositif de détection selon l'une quelconque des revendications 1 à 6, dans lequel le détecteur (1) comprend une unité de normalisation (320) adaptée pour mettre le premier signal de détection et le second signal de détection d'une force réellement appliquée en une relation correspondant à une relation de premier et second signaux de détection déterminés précédemment d'une force maximale appliquée précédemment.

8. Dispositif de détection selon l'une quelconque des revendications 1 à 7, dans lequel le dispositif de détection comprend :
en tant que premier élément de détection de champ magnétique, un premier agencement d'inductance (1030) ayant une première bobine (10) avec une direction de détection principale correspondante (15);
en tant que second élément de détection de champ magnétique, un second agencement d'inductance (2040) ayant une seconde bobine (20) avec une direction de détection principale correspondante;
dans lequel le premier agencement d'inductance (1030) et le second agencement d'inductance (2040) sont connectés;
dans lequel la première bobine (10) et la seconde bobine (20) sont orientées de manière à avoir les directions de magnétisation principale correspondantes (15, 25) orientées vers un objet à détecter;
dans lequel la première bobine (10) et la seconde bobine (20), par rapport aux directions de détection principales correspondantes (15, 25), sont connectées en antiparallèle, en particulier de telle sorte que, dans un champ magnétique homogène appliqué à la première bobine (10) et à la seconde bobine (20), leurs signaux ont pour résultat une compensation au moins partielle des signaux sur la première bobine et la seconde bobine, menant à un signal résultant sur la première agencement d'inductance et la seconde agencement d'inductance.

9. Dispositif de détection selon la revendication 8, comprenant en outre un concentrateur de flux (100) avec une première branche (110) et une seconde branche (120), dans lequel la première bobine (10) est enroulée autour de la première branche et la seconde bobine (20) autour de la seconde branche.

10. Dispositif de détection selon l'une quelconque des revendications 8 et 9, dans lequel le concentrateur de flux comprend une autre branche (150), dans lequel l'élément générateur de champ magnétique est une bobine (50) enroulée autour de l'autre branche (150), dans lequel l'autre branche est située à une articulation d'une branche de culasse de la première branche (110) et une branche de culasse de la deuxième branche (120).

11. Dispositif de détection selon l'une quelconque des revendications 1 à 10, dans lequel la branche de culasse de la première branche (110) et la branche de culasse de la deuxième branche (120) forment un "V", en particulier sont orthogonales entre elles.

12. Dispositif de détection selon l'une quelconque des revendications 8 à 11, dans lequel le premier agencement d'inductance (1030) comporte en outre une troisième bobine (30) avec une direction de détection principale correspondante (35); dans lequel le second agencement d'inductance (2040) comporte en outre une quatrième bobine (40) avec une direction de détection principale correspondante (45); dans lequel la troisième bobine (30) et la quatrième bobine (40) sont orientées de manière à avoir les directions de magnétisation principales respectives (35, 45) orientées vers un objet à détecter; dans lequel la première bobine (10) et la troisième bobine (30) sont reliées en série et la deuxième bobine (20) et la quatrième bobine (40) sont reliées en série; dans lequel la connexion en série de la première bobine (10) et de la troisième bobine (30) par rapport à leurs directions de détection principales (15, 35) sont connectées antiparallèlement à la connexion en série de la deuxième bobine (20) et de la quatrième bobine (40) par rapport à leurs directions de détection principales (25, 45), en particulier de telle sorte que dans un champ magnétique homogène appliqué sur la première bobine (10), la deuxième bobine (20), la troisième bobine (30 et la quatrième bobine (40) entraîne une compensation au moins partielle des signaux au niveau de la première bobine, de la deuxième bobine, de la troisième bobine et de la quatrième bobine, menant à un signal résultant sur le premier agencement d'inductance et le second agencement d'inductance.

13. Dispositif de détection selon l'une quelconque des revendications 1 à 7, dans lequel le dispositif de détection comprend un concentrateur de flux, dans lequel le concentrateur a une bobine enroulée autour celui-ci, laquelle bobine sert à la fois de générateur de champ magnétique et d'élément de détection de champ magnétique, les signaux de détection étant obtenus soit par une détection de courant entre l'unité de commande et la bobine, soit par une chute de tension sur la bobine.
